# EUROPEAN PATENT SPECIFICATION

(11) **EP 1 653 137 B1**
(45) Date of publication and mention of the grant of the patent: **26.03.2014**
(21) Application number: 05023009.3
(22) Date of filing: 21.10.2005
(51) Int. Cl.: B32B 27/32, B32B 27/34, B32B 27/28, B32B 1/08, F16L 11/04, B32B 27/08

(54) **Multilayer resin pipe**
Mehrschichtiges Kunststoffrohr
Tube plastique multicouche

(30) Priority: 29.10.2004 JP 2004316345
(43) Date of publication of application: 03.05.2006
(73) Proprietor: Sanoh Kogyo Kabushiki Kaisha, Tokyo-to 150 0013 (JP)
(72) Inventor: Sato, Masatomi, Koga-shi Ibaraki-ken (JP)
(74) Representative: HOFFMANN EITLE

(56) References cited:
- EP-A- 0 601 295
- US-A- 5 425 817
- US-A- 5 910 544

## Description

### BACKGROUND OF THE INVENTION

### Field of the Invention

The present invention relates to a resin pipe for an automotive fuel line and, more particularly, to a multilayer resin pipe having improved impact strength.

### Description of the Related Art

Metal pipes have been generally used as fuel pipes on automobiles. Metal pipes are plated or coated with a resin film to enhance the corrosion resistance and chemical resistance thereof.

Recently, resin pipes have been used instead of metal pipes for fuel lines. Resin pipes have many advantages over metal pipes. Resin pipes are not rusted, can be easily processed, are lightweight and increase the degree of freedom of design.

Polyamide 11 and polyamide 12 are thermoplastic resins prevalently used for making pipes for fuel lines. Polyamide 11 and polyamide 12 are excellent in chemical resistance and heat resistance and are suitable materials for forming pipes for fuel lines.

Recently, three-layer and five-layer pipes having improved functional properties have been developed. When a pipe including a weak resin layer having low impact strength is impacted, cracks appear in the weak resin layer and the cracks in the low-strength resin layer develop over the entire pipe. Therefore, the outermost resin layer of a multilayer resin pipe is made of a resin containing a plasticizer as a flexibilizer or a resin containing an elastomer.

A principal object of a plasticizer added to polyamide 11 or polyamide 12 forming a pipe is to improve the flexibility of the pipe and does not improve the impact resistance of the pipe at low temperatures.

The outermost layer made of a resin containing an elastomer included in a multilayer resin pipe does not have impact strength sufficient to protect the inner layers of the multilayer resin pipe.

US-A-5 910 544 discloses a thermoplastic elastomer composition comprising: (i) from 15 to 80 parts by weight of a polyamide thermoplastic resin as component A; (ii) from 20 to 85 parts by weight of a rubber composition as component B, said rubber composition containing a copolymer rubber composed of a copolymer of a C4 to C7 isomonoolefin and a p-alkylstyrene, whereby at least a part of the p-alkylstyrene unit portions thereof have a halogen atom; and (iii) a cross-linking agent, wherein component A forms a continuous phase and at least part of component B is dispersed in component A as a dispersed phase and at least part of the dispersed phase is cross-linked by the cross-linking agent. Said thermoplastic elastomer composition may additionally contain a low permeability thermoplastic resin component, to be selected among various resins, including a nylon66/PPS copolymer, polybutylenenaphthalate, LCP, EVOH, etc. Said elastomer composition is used for the outermost layer and/or for the innermost layer in a multilayered resin pipe, to be used as an automotive fuel pipe.

### SUMMARY OF THE INVENTION

Accordingly, it is an object of the present invention to solve the foregoing problems in the prior art and to provide a multilayer resin pipe having a high impact strength that could not have been exercised by the conventional resin pipes respectively made principally of polyamide 11 and polyamide 12.

Another object of the present invention is to provide a multilayer resin pipe including a weak resin layer having low impact strength and having sufficient impact strength.

The present invention provides a multilayer resin pipe including a plurality of resin layers respectively made of thermoplastic resins, wherein the outermost one of the plurality of resin layers is made of a mixed resin prepared by mixing polyamide 11 or polyamide 12 as a base resin and polyamide 11 or polyamide 12 containing an elastomer as an additive resin to disperse the elastomer uniformly in the mixed resin. The middle resin layer is a low-permeability resin layer made of a polyphenylene sulfide resin (PPS), an ethylene-vinyl alcohol resin (EvOH), a liquid crystalline polymer (LCP) or a polybutylene naphthalate resin (PBN).

The innermost resin layer having an inside surface to be exposed to fuel flowing through the multilayer resin pipe and a resistivity of 10⁶Ω•cm or below is made of a polyphenylene sulfide resin containing carbon fibers.

In the multilayer resin pipe according to the present invention, the elastomer is an olefin elastomer containing an olefin as a principal component. Preferably, the olefin is ethylene, propylene or butylene.

The olefin elastomer content of the additive resin to be mixed with the base resin is 5% by weight or above. A commercially available additive resin having such an olefin elastomer content is, for example, RIRUSAN F15XN, Atofina Japan.

The multilayer resin pipe of the present invention having a layer made of a mixed resin containing PA 11 or PA 12 as a base resin has a high impact strength that could not have been exercised by the conventional resin pipes.

### BRIEF DESCRIPTION OF THE DRAWINGS

Fig. 1 is a cross-sectional view of a multilayer resin pipe in a first embodiment according to the present invention;
Fig. 2 is a cross-sectional view of a multilayer resin pipe in a second embodiment according to the present invention;
Fig. 3 is a cross-sectional view of a multilayer resin pipe in a third embodiment according to the present invention; and
Fig. 4 is a cross-sectional view of a multilayer resin pipe in a fourth embodiment according to the present invention;

### DESCRIPTION OF THE PREFERRED EMBODIMENTS

Multilayer resin pipes in preferred embodiments according to the present invention will be described with reference to the accompanying drawings.

### First Embodiment

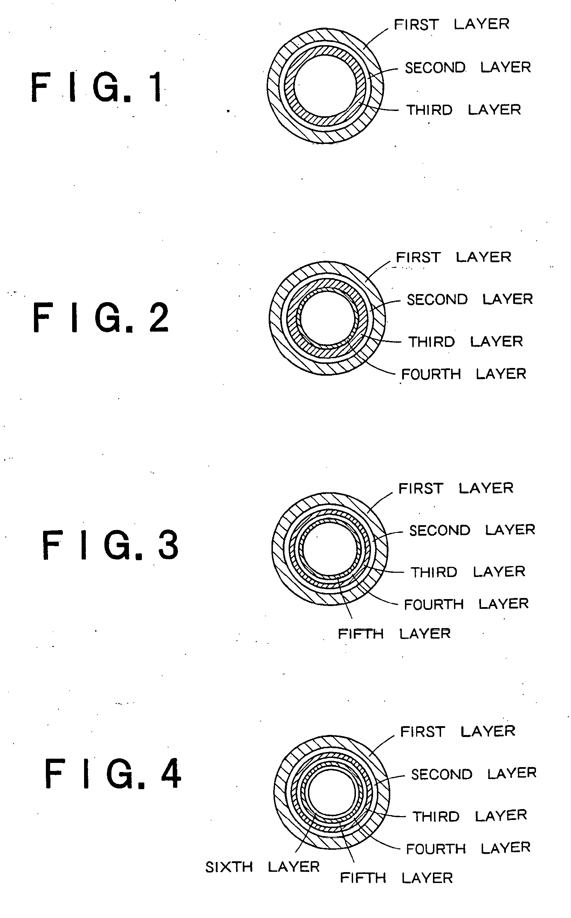

Referring to Fig. 1 showing a multilayer resin pipe in a first embodiment according to the present invention, the multilayer resin pipe is a three-layer resin pipe having a first layer, namely, an outer layer, a second layer, namely, an adhesive middle layer, and a third layer, namely, an inner layer. This multilayer resin pipe is intended for use as an automotive fuel pipe. Table 1 shows possible combinations of resins for forming the first, the second and the third layer of the multilayer resin pipe in the first embodiment.

The third layer to be exposed to fuel is made of a low-permeability resin having a low permeability to fuel. The term "low-permeability resin" is used to indicate resins meeting a quality determined by the following permeability test method. A CARB DBL method which is carried out by a SHED testing machine is a representative permeability test method of testing resins for fuel pipes.

A sample resin pipe 2 having an inside diameter of 6 mm, an outside diameter of 8 mm and a length of 5 m or above is tested. The opposite ends of the sample resin pipe are connected by sealing joints to a sealed container made of a stainless steel. The resin pipe filled up with test fuel is held at 40°C for fifty days or longer for pretreatment. Then, the pretreated sample resin pipe is connected to a SHED testing machine. The SHED testing machine measures the quantity of hydrocarbons permeated the sample resin pipe and contained in the test fuel contained in the sample resin pipe. When the measured quantity of hydrocarbons is 50 mg/m·day or below, the resin forming the resin pipe is called a low-permeability resin. A PPS forming the third layer is a low-permeability resin that permits a quantity of hydrocarbons not greater than 50 mg/m·day to permeate a pipe made of the same resin.

A polyamide resin, such as PA 11 or PA 12, is used for forming the first layer. When a mixed resin prepared by mixing a base resin and an additive resin is used, the base resin is, for example, PA 11 not containing any elastomer, and the additive resin is, for example, PA 11 containing an elastomer. A granular base resin, namely, granular PA 11, and a granular additive resin, namely, granular PA 11 containing an elastomer, are mixed by a dry blending process to prepare a granular mixed resin. The granular mixed resin for forming the first layer is supplied to and is plasticized by an extruder. The multilayer resin pipe is formed by a coextrusion process using an extruder. Materials of the first, the second and the third layer may be melted separately by the plasticizing units of different extruders and extruded by the extruders, respectively.

### Second Embodiment

Referring to Fig. 2 showing a multilayer resin pipe in a second embodiment according to the present invention, the multilayer resin pipe is a four-layer resin pipe having a first layer made of a resin containing an elastomer, namely, an outer layer, a second layer made of an adhesive, namely, an adhesive middle layer, a third layer made of a low-permeability resin and a fourth layer, namely, an inner layer. Table 2 shows possible combinations of resins for forming the first, the second, the third and the fourth layer of the multilayer resin pipe.

The fourth layer is made of an electrically conductive PPS containing carbon fibers. Preferably, the resistivity of the fourth layer is 10⁶ Ω·cm or below. The thickness of the fourth layer must be 0.12 mm or above. The fourth layer to be exposed to fuel is an electrically conductive low-permeability resin layer capable of preventing the accumulation of static electricity.

### Third Embodiment

Referring to Fig. 3 showing a multilayer resin pipe in a third embodiment according to the present invention, the multilayer resin pipe is a five-layer resin pipe having a first layer made of a resin containing an elastomer, namely, an outer layer, a second layer made of an adhesive, namely, an adhesive middle layer, a third layer made of a low-permeability resin, a fourth layer, namely; an adhesive layer, and a fifth layer, namely, an inner layer. Table 3 shows possible combinations of resins for forming the first, the second, the third, the fourth and the fifth layer of the multilayer resin pipe.

The third layer, namely, the low-permeability resin layer, is made of one of resins having high permeation-resisting ability, such as polyphenylene sulfide resins (PPS), ethylene-vinyl alcohol resins (EvOH), liquid crystalline polymers (LCP) and polybutylene naphthalate resins (PBN).

The fifth layer is made of PA 11, PA 12, PPS or an ethylene-tetrafluoroethylene copolymer (ETFE).

### Fourth Embodiment

Referring to Fig. 4 showing a multilayer resin pipe in a fourth embodiment according to the present invention, the multilayer resin pipe is a six-layer resin pipe having first, second, third, fourth and fifth layers respectively corresponding to the first, second, third, fourth and fifth layers of the multilayer resin pipe in the third embodiment, and a sixth layer, namely, an innermost layer made of an ETFE. Table 4 shows combinations of resins for forming the first, the second, the third, the fourth, the fifth and the sixth layer of the multilayer resin pipe.

### Examples

Three-layer resin pipes in examples and comparative examples were subjected to cold impact tests. The three-layer resin pipes had first layers of different thicknesses, respectively. Results of the cold impact tests are shown in Table 5. Each of the three-layer resin pipes in examples and comparative examples had a second layer (adhesive layer) of 0.1 mm in thickness and a third layer (PPS layer) of 0.2 mm in thickness.

The first layer of the three-layer resin pipe in Comparative example 1 was made of PA 11 not containing any plasticizer (BESN BK OTL, Atofina Japan). The first layer of the three-layer resin pipe in Comparative example 2 was made of PA 11 containing a plasticizer (BESN BK 02OTL, Atofina Japan). The first layer of the three-layer resin pipe in Comparative example 3 was made of PA 11 containing an elastomer (RIRUSAN F15XN, Atofina Japan). The first layers of the three-layer resin pipes in Comparative examples 4 and 5 were made of mixed resins each prepared by mixing PA 11 not containing any elastomer, namely, a base resin, and PA 11 containing an elastomer, namely, an additive resin. The ratio of PA 11 containing an elastomer to PA not containing any elastomer was high. The PA 11 with an elastomer content of each mixed resin was between 25 and 35% by weight.

A sample three-layer resin pipe was held at 120°C for 130 hr in a heating furnace to promote heat aging. Then, the sample three-layer resin pipe was kept in a cold chamber refrigerated at -40°C for 5 hr, weights of 450 g and 900 g were dropped on the sample three-layer resin pipe from a height of 300 mm in the cold chamber. The sample three-layer resin pipe was examined visually for cracks. In Table 5, circles indicate that any cranks were not formed in the sample three-layer resin pipes and crosses indicate that cracks were formed in the sample three-layer resin pipes.

It is known from the results of the cold impact tests that the three-layer resin pipe in Comparative example 1 having the first layer made of PA 11 not containing any plasticizer has a low impact strength, and the three-layer resin pipe in Comparative example 2 has a slightly improved impact strength owing to the addition of a plasticizer to PA 11 for forming the first layer. Data on the three-layer resin pipe in Comparative example 3 shows that the impact strength of PA 11 containing an elastomer is not high. It is inferred that the elastomer is not satisfactorily dispersed in PA 11 and the simple addition of the elastomer to PA 11 does not result directly in improving impact strength.

The three-layer resin pipe in Example has a high impact strength. It is inferred that the flocculating elastomer contained in the additive resin is dispersed satisfactorily uniformly in the mixed resin when the base resin, namely, PA 11, and the additive resin, namely, PA 11 containing the elastomer, are mixed and, consequently, the elastomer contributes effectively to the improvement of impact strength.

As obvious from data on the three-layer resin pipe in Comparative example 5, impact strength decreases as the PA 11 with an elastomer content increases. The impact strength of the three-layer resin pipe in Comparative example 4 is substantially equal to that of the three-layer resin pipe in Comparative example 2 having the first layer made of PA 11 containing a plasticizer. It is inferred that the impact strength of the three-layer resin pipe in Comparative example 4 is low because the base resin content of the mixed resin forming the first layer is excessively small and the elastomer flocculating at first cannot disperse uniformly in the mixed resin. It is known from the results of the impact tests that the elastomer content of PA 11 or PA 12 to be added to the base resin must be 5% by weight or above.

It is expected that the impact strength of an impact-resistant layer having an excessively small thickness is low, which was proved by the impact strength tests. On the other hand, it is not necessarily true that a thicker impact-resistant layer is desirable. It is known from the results of the impact strength tests that a proper thickness of the first resin layer, namely, the impact-resistant layer, is between 0.7 and 0.9 mm.

**Table 1**

| | | | | | |
|---|---|---|---|---|---|
| First layer | Base resin | PA11 | PA11 | PA12 | PA12 |
| | Elastomer additive resin | PA11 | PA12 | PA11 | PA12 |
| Second layer | | Adhesive | Adhesive | Adhesive | Adhesive |
| Third layer | | PPS | PPS | PPS | PPS |

**Table 2**

| | | | | | |
|---|---|---|---|---|---|
| First layer | Base resin | PA11 | PA11 | PA12 | PA12 |
| | Elastomer additive resin | PA11 | PA12 | PA11 | PA12 |
| Second layer | | Adhesive | Adhesive | Adhesive | Adhesive |
| Third layer | | PPS | PPS | PPS | PPS |
| Fourth layer | | Electrically Conductive PPS | Electrically Conductive PPS | Electrically Conductive PPS | Electrically Conductive PPS |

**Table 3**

| | | | | | |
|---|---|---|---|---|---|
| First layer | Base resin | PA11 | PA11 | PA12 | PA12 |
| | Elastomer additive resin | PA11 | PA12 | PA11 | PA12 |
| Second layer | | Adhesive | Adhesive | Adhesive | Adhesive |
| Third layer | | EvOH | PBN | PPS | PBT |
| Fourth layer | | Adhesive | Adhesive | Adhesive | Adhesive |
| Fifth layer | | PA11 | PA12 | PPS | ETFE |

**Table 4**

| | | | | | |
|---|---|---|---|---|---|
| First layer | Base resin | PA11 | PA11 | PA12 | PA12 |
| | Elastomer additive resin | PA11 | PA12 | PA11 | PA12 |
| Second layer | | Adhesive | Adhesive | Adhesive | Adhesive |
| Third layer | | EvOH | PBN | PPS | PBT |
| Fourth layer | | Adhesive | Adhesive | Adhesive | Adhesive |
| Fifth layer | | PA11 | PA11 | PA12 | PA12 |
| Sixth layer | | ETFE | ETFE | ETFE | ETFE |

**Table 5**

| | | 1.0mm | | 0.9mm | | 0.8mm | | 0.7mm | | 0.6mm | |
|---|---|---|---|---|---|---|---|---|---|---|---|
| | | 450g | 900g | 450g | 900g | 450g | 900g | 450g | 900g | 450g | 900g |
| ① | Comp. ex. 1 (PA 11) | × | × | × | × | × | × | × | × | × | × |
| ② | Comp. ex. 2 (PA 11 + plasticizer) | × | × | ○ | × | ○ | × | × | × | × | × |
| ③ | Comp. ex. 3 (PA 11 + elastomer) | × | × | × | × | × | × | × | × | × | × |
| ④ | Comp ex. 4 (70% by weight ③) | × | × | × | × | × | × | × | × | × | × |
| ⑤ | Comp. ex. 5 (50% by weight ③) | × | × | ○ | × | ○ | × | × | × | × | × |
| ⑥ | Ex. | ○ | × | ○ | ○ | ○ | ○ | ○ | × | × | × |

## Claims

1. A multilayer resin pipe comprising a plurality of resin layers respectively made of thermoplastic resins, wherein the outermost one of the plurality of resin layers is made of a mixed resin prepared by mixing polyamide 11 or 12 as a base resin, and polyamide 11 or 12 containing an elastomer as an additive resin to disperse the elastomer uniformly in the mixed resin, and
wherein the middle resin layer is a low-permeability resin layer made of a polyphenylene sulfide resin, an ethylene-vinyl alcohol resin, a liquid crystalline polymer or a polybutylene naphthalate resin, and wherein the innermost resin layer having an inside surface to be exposed to fuel flowing through the multilayer resin pipe and a resistivity of 10⁶Ω•cm or below is made of a polyphenylene sulfide resin containing carbon fibers.

2. The multilayer resin pipe according to claim 1, wherein the elastomer is an olefin elastomer, and the additive resin has an olefin elastomer content of 5% by weight or above.

3. The multilayer resin pipe according to claim 1, wherein the outermost resin layer has a thickness between 0.7 and 0.9 mm.

4. The multilayer resin pipe according to claim 1, wherein the innermost layer serving as a low-permeability resin layer has a thickness of 0.12 mm or above.

5. The multilayer resin pipe according to claim 1 intended for use as an automotive fuel pipe.

## Patentansprüche

1. Mehrschichtharzrohr, das eine Vielzahl an Harzschichten aus jeweils thermoplastischen Harzen umfasst, wobei die äußerste der Vielzahl an Harzschichten aus einem gemischten Harz hergestellt ist, das durch Mischen von Polyamid 11 oder 12 als Basisharz und Polyamid 11 oder 12, welches ein Elastomer enthält, als Zusatzharz, um das Elastomer gleichmäßig in dem gemischten Harz zu dispergieren, hergestellt wird, und
wobei die mittlere Harzschicht eine Harzschicht mit geringer Permeabilität ist, die aus einem Polyphenylensulfidharz, einem Ethylenvinylalkoholharz, einem flüssigkristallinen Polymer oder einem Polybutylennaphthalatharz hergestellt ist, und wobei die innerste Harzschicht, die eine Innenfläche, welche durch das Mehrschichtharzrohr fließendem Kraftstoff ausgesetzt ist, und einen spezifischen Widerstand von 10⁶ Ω·cm oder weniger hat, aus einem Polyphenylensulfidharz mit Kohlenstofffasern hergestellt ist.

2. Mehrschichtharzrohr gemäß Anspruch 1, wobei das Elastomer ein Olefinelastomer ist und das Zusatzharz einen Olefinelastomergehalt von 5 Gew.% oder mehr hat.

3. Mehrschichtharzrohr gemäß Anspruch 1, wobei die äußerste Harzschicht eine Dicke zwischen 0,7 und 0,9 mm hat.

4. Mehrschichtharzrohr gemäß Anspruch 1, wobei die innerste Schicht, die als Harzschicht mit geringer Permeabilität dient, eine Dicke von 0,12 mm oder mehr hat.

5. Mehrschichtharzrohr gemäß Anspruch 1, das zur Verwendung als Automobilkraftstoffleitung vorgesehen ist.

## Revendications

1. Tuyau en résine multicouche comprenant une pluralité de couches de résine constituées respectivement de résines thermoplastiques, dans lequel la couche de résine extérieure parmi la pluralité de couches de résine est constituée d'une résine mixte préparée en mélangeant un polyamide 11 ou 12 servant de résine de base, et un polyamide 11 ou 12 contenant un élastomère servant de résine additive pour disperser l'élastomère uniformément dans la résine mixte, et
dans lequel la couche de résine centrale est une couche de résine de faible perméabilité constituée d'une résine de sulfure de phénylène, d'une résine d'éthylène-alcool vinylique, d'un polymère cristallin liquide ou d'une résine polybutylène naphtalate, et dans lequel la couche de résine intérieure ayant une surface intérieure devant être exposée au carburant passant par le tuyau en résine multicouche et une résistivité de 10⁶ Ω·cm ou moins est constituée d'une résine de sulfure de polyphénylène contenant des fibres de carbone.

2. Tuyau en résine multicouche selon la revendication 1, dans lequel l'élastomère est un élastomère oléfinique, et la résine additive a une teneur en élastomère oléfinique de 5% en poids ou plus.

3. Tuyau en résine multicouche selon la revendication 1, dans lequel la couche de résine extérieure a une épaisseur comprise entre 0,7 et 0,9 mm.

4. Tuyau en résine multicouche selon la revendication 1, dans lequel la couche intérieure servant de couche de résine de faible perméabilité a une épaisseur de 0,12 mm ou plus.

5. Tuyau en résine multicouche selon la revendication 1 destiné à être utilisé comme tuyau d'alimentation en carburant pour une automobile.
